# EUROPEAN PATENT APPLICATION

(11) **EP 1 842 885 A1**
(43) Date of publication of application: **10.10.2007**
(21) Application number: 07105620.4
(22) Date of filing: 04.04.2007
(51) Int. Cl.: C09D 167/06

(54) **styrene-free varnish based on polyunsaturated polyester resins**

(30) Priority: 05.04.2006 IT MI20060670
(71) Applicant: IVM S.R.L., 20123 Milan (IT)
(72) Inventor: Cinti, Guido, 20052, MONZA (Milan) (IT); Taormina, Antonino, 20051, LIMBIATE (Milan) (IT)
(74) Representative: De Gregori, Antonella

(57) **Abstract**

The present invention relates to formulations of unsaturated polyester varnishes for wood, wherein the styrene-based solvent systems have been substituted with selected air-drying reactive solvents with the use of radicalic initiators and accelerating agents based on metal salts.

## Description

The present invention relates to a varnish based on styrene-free polyunsaturated polyester resins.

The present invention essentially derives from the field of formulations of polyester varnishes for wood.

In particular, the present invention relates to formulations of polyester varnishes for wood wherein the styrene-based solvents have been substituted with selected reactive solvents.

The use of unsaturated polyester resins in formulations of varnishes for wood has been known for some time.

The following components are normally present in varnish formulations:
- a polyester resin deriving from the polycondensation of bi- or tri-functional alcohols with acids or di- or tri-basic anhydrides having, in their molecular structure, functionalities based on unsaturated groups (double ethylene bonds);
- a solvent consisting of styrene monomer also having a double bond of the ethylene type in the structure;
- a polymerization promoter capable of producing free radicals (organic peroxides) capable of attacking the ethylenically unsaturated functionality present in both the polyester resin and styrene;
- a polymerization accelerating agent generally a metal salt, mainly cobalt octoates, capable of triggering the formation of free radicals and starting the polymerization reaction.

The polymerization reaction is rather complex and envisages not only the opening, thanks to the free radicals formed, of the double bonds with propagation of the polymerization itself, but also the opening of the styrene double bonds, with the formation of styrene bridges which connect with the various polyester polymeric chains.

Styrene, whose molecule has extremely reduced dimensions with respect to the dimensions of the polyester resin, has a greater mobility and a greater tendency towards the formation of radicalic species with respect to polyester resins, consequently the opening of the styrene double bond gives rise to the propagation of the radicalic polymerization reaction which then causes the formation of the cured polyester resin.

Styrene has a double function in the formulation: forming an excellent solvent system for the polyester resin in both the production phase of the resin and in the subsequent application phase, and, thanks to the presence of the ethylene functionality, contributing to the polymerization of the film.

There can in turn be two types of polyester resins:
- resins deriving from the reaction between polyacids and polyalcohols and dissolved in styrene monomer;
- resins deriving from the reaction between polyacids and polyalcohols with the addition in the terminal part of the polymeric chain of monomers of the allyl type and again dissolved in styrene monomer.

The polymers deriving from the first type of reaction are inhibited, in their polymerization, by the presence of oxygen, not those of the second type.

For this reason, in the former case particular components must be added, such as paraffins, which by migrating to the surface in the drying phase, form an adequate barrier of the film towards oxygen.

In the second case, the presence of terminal allyl groups, on the contrary, favours polymerization in the presence of oxygen.

As can be seen, in both cases the solvent phase consists of styrene monomer which, by giving rise to the formation of styrene bridges from chain to chain, contributes to producing a polymerized film having a high cross-linking density. Furthermore, the presence of "styrene bridges" between the polyester chains contributes to regulating the flexibility of the film. In the absence of said styrene bridges, the resulting film would be extremely fragile due to the reduced distances between the polyester polymeric chains.

The cross-linking of a polyester resin with the formation of styrene bridges can be illustrated as follows: 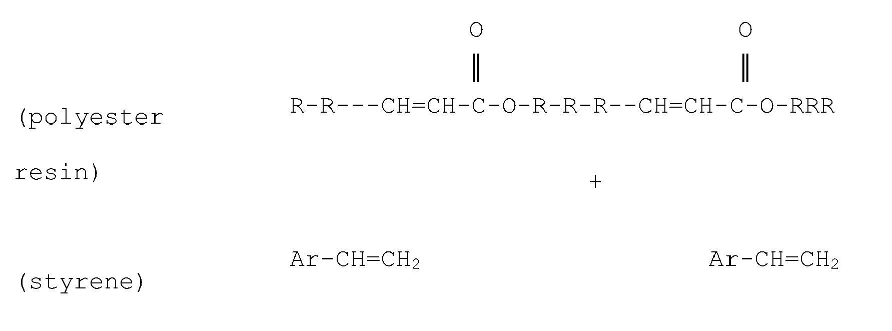 wherein
R-R-R is a polymeric chain formed by the polycondensation of bi- or tri-functional polyalcohols with bi- or trifunctional polyacids;
Ar is the phenyl group of the styrene monomer,

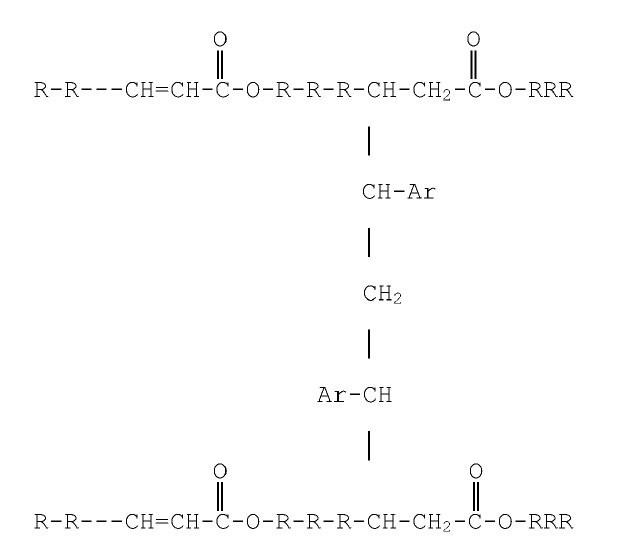

At present, styrene remains an essential component in polyester resins and in the formulation of varnishes based on polyester resins. In the chemistry of polyester resins, this monomer in fact has the triple function of:
- solvent phase in both the production and application, contributing to reducing the viscosity of the system;
- reactive component which contributes, in the polyester system, to starting the radicalic polymerization giving rise to an extremely rapid system;
- forming "styrene bridges" within the polyester structure, providing an adequate distance between the polyester polymer chains, producing a sufficiently flexible film.

In spite of this appreciable characteristics, styrene remains a harmful substance classified as such by the community regulations in force, 2B by IARC (International Agency for Cancer Research).

For this specific reason various manufacturers do not use varnishes containing styrene monomer for the varnishing of their end-products.

The necessity is therefore currently felt for availing of varnishing systems having typical technical performances of polyester varnishes: high mechanical resistance, good flexibility, high dry residue and covering of the carrier but without resorting to the use of styrene monomer as organic solvent. Restrictions completely analogous to those relating to styrene monomer are applied to vinyltoluene.

In view of this technical problems which is particularly felt in the furniture industry, attempts have been made to eliminate the presence of styrene monomer from compositions of varnishes and substitute it with other types of organic solvents. The attempts so far made, however, have not been successful mainly as a result of the following drawbacks:
- slow drying of the varnish;
- lack of flexibility of the film with the consequent formation of breakages.

One of the objectives of the present invention consists in providing a formulation of varnish based on unsaturated polyester resin which as solvent phase is free of styrene or vinyltoluene.

Another objective of the invention consists in providing a varnish based on unsaturated polyester resin which does not create risks of toxicity of the varnishes containing styrene and the restrictions of use currently enforced by the market.

A further objective of the invention consists in providing a varnish for wood free of toluene which maintains the technical performances typical of polyester varnishes in terms of mechanical resistance, good flexibility and high dry residue.

The Applicant has now found that the use of reactive solvents, different from styrene or vinyltoluene, having one or more functionalities based on ethylenically unsaturated double bonds in their chemical structure, can be applied in the preparation of varnishes based on unsaturated polyester resins.

A first aspect of the present invention relates to the use of a compound selected from the group comprising mono- and/or bi-functional ethylenically unsaturated monomers deriving from acrylic or methacrylic acid, conveniently selected from:
- mono-alkyl esters of acrylic and/or methacrylic acid preferably containing from 2 to 10 carbon atoms, more preferably from 3 to 5 carbon atoms in the alkyl fraction;
- mono-aryl esters of acrylic and/or methacrylic acid wherein the aryl fraction preferably comprises phenyl, toluyl, xylyl and isomers of xylyl;
- hydroxyalkyl esters of acrylic and/or methacrylic acid preferably containing from 2 to 5 carbon atoms in the alkyl fraction;
- hydroxyaryl esters of acrylic and/or methacrylic acid wherein the acrylic fraction preferably comprises phenyl, toluyl, xylyl and isomers of xylyl;
- bifunctional esters of acrylic and/or methacrylic acid deriving from the esterification of both the hydroxyl functions of alkanediols with acrylic and/or methacrylic acid preferably containing from 2 to 10 carbon atoms, more preferably from 3 to 5 carbon atoms in the alkane chain;
- bifunctional esters of acrylic and/or methacrylic acid deriving from the esterification of both the hydroxyl functions of n-oxyalkanediols with acrylic and/or methacrylic acid preferably containing from 2 to 10 carbon atoms, more preferably from 3 to 5 carbon atoms in the oxyalkane chain and wherein n is preferably a number not higher than 3,
for the production of a varnish based on an unsaturated polyester resin wherein styrene is substantially absent or present only as an impurity.

According to another aspect of the present invention, the use of said mono- and/or bifunctional ethylenically unsaturated monomers deriving from acrylic or methacrylic acid, is provided as a solvent system for a varnish based on unsaturated polyester resin.

It has been observed that the compounds of the invention, in the presence of an unsaturated polyester resin, exert both the function of a solvent phase, contributing to reducing the viscosity of the system, and also as a reactive component which contributes to initiating the radicalic polymerization reaction.

In particular, the compounds of the invention, within a formulation of varnish based on unsaturated polyester resin, behave as reactive solvents as they are not only capable of providing the formulation with suitable reactivity characteristics and the desired mechanical properties of the film of unsaturated polyester resin but also of ensuring a dry residue content which is sufficiently high for giving the formulation the desired filling properties.

According to an embodiment of the invention, hydroxyalkyl esters of acrylic or methacrylic acid are applied, in particular those wherein said alkyl of the hydroxyalkyl ester has from 2 to 5 carbon atoms, in the preparation of varnishes based on polyunsaturated polyester resins.

According to a preferred embodiment of the invention said hydroxyalkyl ester of acrylic or methacrylic acid is selected from hydroxypropylmethacrylate, hydroxyethylmethacrylate and mixtures thereof. According to another embodiment, said hydroxyalkyl ester of acrylic or methacrylic acid is 1,4-butanediol dimethylacrylate.

According to a further embodiment of the present invention, a varnish based on an unsaturated polyester resin is provided, comprising a compound of the invention as previously indicated.

A suitable varnish based on unsaturated polyester resins also comprises in the formulation a polymerization promoter based on a radicalic initiator and a polymerization accelerating agent based on a metal salt.

Typically, said polymerization promoter comprises a radicalic initiator suitable for giving free radicals, i.e. organic peroxides, capable of attacking the ethylenically unsaturated function present in the unsaturated polyester resin.

Said polymerization accelerating agent is a metal salt capable of triggering the formation of free radicals and starting the polymerization reaction, such as cobalt octonate.

The varnish based on an unsaturated polyester resin of the invention has a high mechanical resistance and flexibility, together with a high dry residue which allows an effective covering of the substrate treated without the necessity of resorting to the use of styrene or vinyltoluene as solvent system.

In this way, both the risks of toxicity by exposure with the use of styrene are avoided together with the drawbacks deriving from the use of the unsaturated polyester varnishes of the known art. The varnish of the invention is suitable for applications on wood in particular when there are restrictions for the use of varnishing systems in which styrene is present.

The varnishes of the invention are air-drying varnishes suitable for both aesthetical and protective varnishing, being appropriate for colouring and protecting wooden objects and supports, such as furniture, accessories and derivatives of wood such as veneered and multilayer fiberboards.

The varnishes of the invention can be typically of the transparent type, essentially free of organic or inorganic pigments for coating or fillers, or of the white-coloured pigmented type based on titanium oxide and mineral fillers such as silicates, sulfates, carbonates or having various colours based on pigments of an organic or inorganic nature.

The varnishes of the invention have characteristics of resistance to liquids, resistance to thermal and mechanical changes, drop resistance and resistance to removal in overvarnishing with varnishes based on organic solvents.

The following examples are provided for purely illustrative purposes of the present invention and should not be considered as limiting the protection scope as defined by the enclosed claims.

### EXAMPLE 1

In a preliminary screening phase, A) unsaturated polyester resins and B) reactive solvents were selected as indicated below:

### A) UNSATURATED POLYESTER RESINS

### Resin 1

Unsaturated polyester modified with trimethylolpropanediallylether dissolved in a mixture of acrylic monomers consisting of dipropyleneglycoldiacrylate (DPGDA) and glycerolpropoxytriacrylate (GPTA).

### Resin 2

Multifunctional unsaturated polyester-acrylate oligomer without acrylic monomers.

### Resin 3

Unsaturated polyether-polyol acrylate resin containing amine groups without acrylic monomers.

### Resin 4

Flexible bifunctional unsaturated urethane-acrylate oligomer

### Resin 5

Unsaturated polyester resin modified with trimethylolpropanediallylether dissolved in n-butyl acetate.

### Resin 6

Unsaturated polyester modified with trimethylolpropanediallylether dissolved in n-butyl acetate.

### Resin 7

Hard unsaturated polyester modified with trimethylolpropanediallylether at 100%.

### Resin 8

Plastic unsaturated polyester modified with trimethylolpropanediallylether at 80% in DPGDA.

In order to evaluate the possibility of their use, the above resins were subjected to a reactivity screening bringing them all to the same application viscosity by dilution with methylethylketone and using a standard polymerization system consisting of 2% of methylethylketone peroxide and 2% of solution in xylol of cobalt octoate at 12% of metal.

The results of this pre-screening are indicated in Table I below.

**Table I**

| | |
|---|---|
| Resin | Behaviour on the drying properties |
| Resin 1 | It dries in depth but remains soft on the surface |
| Resin 2 | It does not dry |
| Resin 3 | It does not dry |
| Resin 4 | It does not dry |
| Resin 5 | It dries quite well both in depth and on the surface |
| Resin 6 | It dries quite well in depth, a little less on the surface |
| Resin 7 | It dries quite well in depth, a little less on the surface |
| Resin 8 | Discreet reactivity both in depth and on the surface |

Resins 1-5-6-7-8 were selected for effecting the tests and in this respect a first selection was made of the possible monomers to be used for cutting the viscosity of the finished product, evaluating the reactivity of the polymerization systems consisting of the pair MEK peroxide/cobalt octonate.

### B) REACTIVE SOLVENTS

Monomer 1 : Glycerolpropoxytriacrylate
Monomer 2 : 1,4-Butanediolmethylacrylate
Monomer 3 : Triethyleneglycol methacrylate

The reactivities of various resin-monomer combinations were evaluated by measuring both the useful lifetime and the gel time on a quantity of 200 grams accelerated and catalyzed at 2% with a solution of cobalt octonate and methylethylketone peroxide.

The quantity of monomer added with respect to the resin is in a ratio of 30 parts by weight of monomer added to 70 parts by weight of resin, except for cases in which the reactivity of the resin alone was to be tested.

Table II below indicates the results of this series of tests.

**Table II**

| Resin | Monomer | Useful Life | Gel time |
|---|---|---|---|
| Resin 1 | - | 63'00" | 4h 05' |
| Resin 5 | - | 25'30" | 2h 10' |
| Resin 6 | - | 68'30" | 6h 10' |
| Resin 7 | - | 55'00" | 5h 20' |
| Resin 8 | - | 10'50" | 1 h 15' |
| Resin 1 | Monomer 1 | 8'30" | 3h 15' |
| Resin 1 | Monomer 2 | 11'00" | 3h 50' |
| Resin 1 | Monomer 3 | 11'30" | 4h 40' |
| Resin 5 | Monomer 1 | 21'30" | 1 h 50' |
| Resin 5 | Monomer 2 | 16'30" | 7h 30' |
| Resin 5 | Monomer 3 | 13'30" | 7h 25' |
| Resin 6 | Monomer 1 | 41'00" | 7h 25' |
| Resin 6 | Monomer 2 | 46'30" | 7h 25' |
| Resin 6 | Monomer 3 | 35'00" | 7h 20' |
| Resin 7 | Monomer 1 | 9'30" | 3h 50' |
| Resin 7 | Monomer 2 | 11'30" | 4h 10' |
| Resin 7 | Monomer 3 | 10'00" | 4h 50' |
| Resin 8 | Monomer 1 | 25'30" | 2h 10' |
| Resin 8 | Monomer 2 | 18'30" | 6h 30' |
| Resin 8 | Monomer 3 | 15'30" | 7h 00' |

Resins 1, 5 and 8 gave the best reactivity characteristics. Resin 1 did not prove to be particularly reactive on the surface, resin 8 produced a fragile film whereas resin 5 had a quantity of about 20% of non-reactive organic solvent which caused partial shrinkage of the film, drop, dots and possible cracks if applied to excessive thicknesses.

### Formulation of end-products

Following the preliminary tests described above, a series of formulations of end-products were established, white-coloured sandable bases filled with titanium oxide and mineral fillers (calcium carbonate and talc), using pyrogenic silica for regulating the rheological properties (viscosity and dripping resistance) and zinc stearate as additive for facilitating the sandpapering.

The binding system consisted of variants between more or less reactive and/or more or less fragile resins. The monomer selected for this series of tests was glycerolpropoxy-triacrylate (GPTA).

The formulations of the end-products thus established are indicated in Table III below and were evaluated by comparison with a normal white sandable polyester base based on modified unsaturated polyester resins dissolved in styrene monomer. The numbers indicated are parts by weight.

**Table III**

| | Formula 1 | Formula 2 | Formula 3 | Formula 4 | Formula 5 |
|---|---|---|---|---|---|
| Resin 5 | 35 | | 20 | | |
| Resin 7 | | 20 | | | |
| Resin 8 | | 15 | 15 | 15 | |
| Resin 6 | | | | 20 | 35 |
| GPTA | 10 | 10 | 10 | 10 | 10 |
| BYK P104 | 0.15 | 0.15 | 0.15 | 0.15 | 0.15 |
| Rutile titanium dioxide | 9 | 9 | 9 | 9 | 9 |
| Calcium carbonate | 30 | 30 | 30 | 30 | 30 |
| Micronized talc | 3 | 3 | 3 | 3 | 3 |
| Aerosil 380 | 0.7 | 0.7 | 0.7 | 0.7 | 0.7 |
| Zinc stearate | 3 | 3 | 3 | 3 | 3 |
| Toluene | as requ. | as requ. | as requ. | as requ. | as requ. |

wherein BYK is a wetting additive based on a solution of low molecular weight unsaturated polycarboxylic acid and a copolymer based on polysiloxane, produced by BYK Chemie GmbH, Germany; and
Aerosol 380 is pyrogenic silica produced by Degussa, Germany.

The final quantity of final toluene added was such as to have a final viscosity in the order of 20 seconds at 20°C measured with an efflux cup having a diameter of 8 mm.

The products thus obtained all had a dry residue varying from 83% to 90%, a content of reactive monomer of 10-15% and a content of other non-reactive solvents ranging from 9% to 15%.

The products thus formulated were mixed with 2% of a solution of cobalt octoate and 2% of methylethylketone peroxide, and the mixture was then applied to a medium density fiberboard (MDF) in two coats in a ratio of 180 gr/mq per coat.

The following evaluation were effected on the above formulates:
Gel time in mass
Gel time on the film applied
Qualitative verticality evaluation (dripping resistance after application on a vertical support)
Distension of the film after application on a horizontal support
Surface hardness after a day's drying
(comparative evaluation)
Sandability
Colour of the film (typical colour change to green which occurs in white products polymerized with cobalt-peroxide systems)
Resistance to the formation of cracks after hot-cold cycles (cold-checks)
This latter test was effected on special milled MDF boards with grooves for verifying the elasticity behaviour along the millings which are points where the tension of the film is most apparent and where there is the greatest criticality from the point of view of the formation of cracks.

The results of the above evaluations are indicated in Table IV below

**Table IV**

| | Form.1 | Form.2 | Form.3 | Form.4 | Form.5 | Std Polyester with styrene |
|---|---|---|---|---|---|---|
| Gel in mass | 25' | 64' | 37' | 46' | 33' | 20' |
| Gel on film | 40' | 73' | 49' | 60' | 47' | 25' |
| Verticality | << Std | = Std | = Std | < Std | < Std | Std |
| Extensibility | = Std | << Std | > Std | < Std | < Std | Std |
| Film hardness | > Std | < Std | < Std | = Std | = Std | Std |
| Sandability | = Std | < Std | << Std | = Std | = Std | Std |
| Green colour | >> Std | > Std | >> Std | > Std | > Std | Std |
| Cold check | < Std | = Std | < Std | < Std | = Std | Std |

The sign < always indicates a deterioration with respect to the standard (std) and the sign > an improvement.

From what is indicated above, it can be deduced that in none of the systems tested are the performances obtained with the standard product based on unsaturated polyester resins in styrene monomer completely reached. The main problem consists in the impossibility of reaching the reactivity requested (in none of the systems are 25' of gel time on the film observed on the standard product, obtained) and in the difficulty of obtaining acceptable plasticity performances.

In order to face the problem of the fragility of the film, a further series of tests were effected, which envisage both the introduction of new plastic resins based on unsaturated polyesters modified with dicyclopentadiene and also reducing the content of fillers in the formulates.

It was found that the addition of various types of flexibilizing polymers did not give the expected results, and that the reduction in the content of fillers, which normally causes an improvement in the mechanical performances, on the contrary caused a deterioration in these.

In short, the conclusions of this first test phase were the following:
- resin 5, although producing generally discreet performances, tends to reduce the reactivity of the system;
- resin 7 slows down the system and makes it fragile;
- resin 8, in spite of the good initial results, shows disappointing performances in the system both from the point of view of reactivity and also the mechanical properties of the film.

### EXAMPLE 2

Tests were prepared, using different monomers with respect to the standard GPTA monomer used in the first series of tests, adopting two other monomers, as an alternative to GPTA, inserted in the series of tests as a comparison,
Monomer 2 : 1,4-butanediol dimethylacrylate
Monomer 5: Hydroxypropylmethacrylate
Monomer 6: Hydroxyethylmethacrylate.

Table V below indicates the formulations of the end-products, again white polyester bases. Tests were prepared based on cuts of the two resins 5 and 7 mentioned above, avoiding resin 8 which could also have been a candidate for the series of tests, but the presence in the resin itself of a further monomer (DPGDA) would have caused difficulty in reading the results and in the evaluation of the effect of the monomer itself on the performances.

**Table V**

| | Formula 6 | Formula 7 | Formula 8 | Formula 9 | Formula 10 |
|---|---|---|---|---|---|
| Resin 5 | 35 | 20 | 20 | 20 | 20 |
| Resin 7 | | 15 | 15 | 15 | 15 |
| Monomer 2 | | | 10 | | |
| Monomer 5 | | | | 10 | |
| Monomer 6 | | | | | 10 |
| GPTA | 10 | 10 | | | |
| BYK P104 | 0.15 | 0.15 | 0.15 | 0.15 | 0.15 |
| Rutile titanium dioxide | 9 | 9 | 9 | 9 | 9 |
| Calcium carbonate | 30 | 30 | 30 | 30 | 30 |
| Micronized talc | 3 | 3 | 3 | 3 | 3 |
| Aerosil 380 | 0.7 | 0.7 | 0.7 | 0.7 | 0.7 |
| Zinc stearate | 3 | 3 | 3 | 3 | 3 |
| Toluene | as requ. | as requ. | as requ. | as requ. | as requ. |

The products thus formulated, brought to the application viscosity and after the addition of an accelerating agent based on cobalt octoate (2%) and polymerization promoter methylethylketone peroxide (2%), were evaluated in comparison with the standard polyester in styrene monomer base.

Table VI below indicates the performances obtained with this latter series of formulations.

**Table VI**

| | Form.6 | Form.7 | Form.8 | Form.9 | Form.10 | Std polyester with styrene |
|---|---|---|---|---|---|---|
| Gel in mass | 25' | 42' | 35' | 45' | 37' | 20' |
| Gel on film | 40' | 55' | 50' | 22' | 23' | 25' |
| Verticality | << Std | = Std | = Std | = Std | = Std | Std |
| Extensibility | = Std | > Std | < Std | > Std | = Std | Std |
| Film hardness | > Std | < Std | < Std | = Std | = Std | Std |
| Sandability | = Std | < Std | = Std | > Std | = Std | Std |
| Green colour | >> Std | >> Std | >> Std | > Std | > Std | Std |
| Cold check | < Std | < Std | << Std | = Std | = Std | Std |

### Conclusions:

Performances were obtained which are generally equal to or higher than those obtained with a traditional unsaturated polyester product based on styrene monomer, with the use of particular varnishes based on unsaturated polyester resins, without styrene monomer, selected on the basis of the reactivity characteristics with cobalt-peroxide systems and mechanical characteristics of the film.

The presence of compounds having a solvent-reactive function according to the invention gave the system suitable reactivity characteristics together with appreciable mechanical properties of the film, and also provided a sufficiently high dry residue content for giving the system the desired filling properties typical of unsaturated polyester varnishes with styrene of the known art.

## Claims

1. Use of a compound selected from the group consisting of mono- and bifunctional ethylenically unsaturated monomers deriving from acrylic or methacrylic acid selected from:
- mono-alkyl esters of acrylic and/or methacrylic acid containing from 2 to 10 carbon atoms in the alkyl fraction;
- mono-aryl esters of acrylic and/or methacrylic acid wherein the aryl fraction comprises phenyl, toluyl, xylyl and isomers of xylyl;
- hydroxyalkyl esters of acrylic and/or methacrylic acid containing from 2 to 5 carbon atoms in the alkyl fraction;
- hydroxyaryl esters of acrylic and/or methacrylic acid wherein the acrylic fraction comprises phenyl, toluyl, xylyl and isomers of xylyl;
- bifunctional esters of acrylic and/or methacrylic acid deriving from the esterification of both the hydroxyl functions of alkanediols with acrylic and/or methacrylic acid containing from 2 to 10 carbon atoms in the alkane chain;
- bifunctional esters of acrylic and/or methacrylic acid deriving from the esterification of both the hydroxyl functions of n-oxyalkanediols with acrylic and/or methacrylic acid containing from 2 to 10 carbon atoms in the oxyalkane chain, wherein n is a number not higher than 3,
for the production of a varnish based on an unsaturated polyester resin in which styrene is substantially absent.

2. Use according to claim 1, **characterized in that** said compound is a hydroxyalkyl ester of acrylic or methacrylic acid containing from 2 to 5 carbon atoms in the alkyl fraction.

3. Use according to claim 2, **characterized in that** said hydroxyalkyl ester of acrylic or methacrylic acid is selected from hydroxypropylmethacrylate, hydroxyethylmethacrylate and mixtures thereof.

4. Use according to claim 1, **characterized in that** said compound is a mono-alkyl ester of acrylic and/or methacrylic acid containing from 3 to 5 carbon atoms in the alkyl fraction.

5. Use according to claim 2, **characterized in that** said hydroxyalkyl ester of acrylic or methacrylic acid is 1,4-butanediol dimethylacrylate.

6. A varnish based on an unsaturated polyester resin comprising a compound according to any of the claims 1-5.

7. The varnish according to claim 6, **characterized in that** it also comprises a radicalic polymerization initiator and a polymerization accelerating agent based on a metal salt.

8. The varnish according to claim 7, **characterized in that** said polymerization accelerating agent is cobalt octonate.

9. Use of a varnish according to any of the claims 6-8 for varnishing substrates or end-products made of wood and/or imitation-wood.

10. Use of mono- and/or bifunctional ethylenically unsaturated monomers deriving from acrylic or methacrylic acid according to any of the claims 1-5, as solvent system for a varnish based on an unsaturated polyester resin.
